Europäisches Patentamt

European Patent Office

Office européen des brevets

(11) Publication number: **0 492 177 A1**

# EUROPEAN PATENT APPLICATION

(21) Application number: **91120547.4**

(22) Date of filing: **29.11.91**

(51) Int. Cl.5: **G06F 15/16**

(30) Priority: **20.12.90 IT 2246290**
**20.12.90 IT 2246390**

(43) Date of publication of application:
**01.07.92 Bulletin 92/27**

(84) Designated Contracting States:
**BE DE ES FR GB NL**

(71) Applicant: **ALCATEL ITALIA S.p.A.**
**Via Monte Rosa 15**
**I-20149 Milano(IT)**
(84) **DE FR GB**

(71) Applicant: **ALCATEL N.V.**
**Strawinskylaan 341 (World Trade Center)**
**NL-1077 XX Amsterdam(NL)**
(84) **BE ES NL**

(72) Inventor: **Fucito, Michele**

**Via A. Cosenza 35**
**I-80062 Meta (Napoli)(IT)**
Inventor: **Recchia, Mauro**
**Via Padova 96**
**Roma(IT)**
Inventor: **Puglia, Silvestro**
**Piazza Aldo Moro 30**
**00040 Pomezia(IT)**
Inventor: **Mariani, Claudio**
**Via Tebaldeschi 15**
**I-00164 Roma(IT)**
Inventor: **Colangeli, Giulio**
**Via U. la Malfa 13**
**Gerenzano, die Roma (RM)(IT)**

(74) Representative: **Brose, Gerhard et al**
**Standard Elektrik Lorenz AG Patent- und**
**Lizenzwesen Postfach 30 09 29**
**W-7000 Stuttgart 30(DE)**

(54) **Circuit device for interfacing between several processing units equipped with microprocessors.**

(57) The invention is directed to the field of control electronic devices and in particular relates to a circuit device for interfacing between several processing units equipped with microprocessors which consist essentially of a control unit (2) connected to serial ports and to parallel ports (3,4,6,7), and a memory (4) relative to the control circuit and an interface (9) for a RAM memory (10), in such a way as, when two different processors are connected through such device, it is possible make the processors to operate, even if of different structure, by exploiting said RAM memory as a connection element, usable in a fashion type multiplexed multiport and/or of type circular queue, FIFO, LIFO: said RAM memory i.e. appears configurable at will, depending on processors to be interfaced.

Fig. 1

The present invention refers to a circuit device for interfacing between several processing units equipped with microprocessors.

As known, when interconnecting devices having processor with different architectures a problem arises with regard to homogeneous interconnection of processors even if they work according to different methods and operations. In other words, there is a difficulty in making both the interconnected processors to work as a unique homogeneous system where, however, the constituting parts normally work according to procedures, frequencies, operation logies very different from each other.

Besides when interfacing between several processors or between computerized systems, comprising processors, there is the need of having at disposal a compact circuitry, preferably an integrated one, which is able to handle a plurality of functions relative to interfacing between the processors themselves.

Such functions are those relating to handling controls for synchronous, asynchronous and DMA communication modes, for example between the processor of a host computer and the processor of a speech processing module, for the control and handling of interrupt signals relative to the processor present in the speech processing module (processor Motorola 68000), as well as for the handling of reset signals, for the decoding of all signals travelling over the interfacing device and for timing and all distributed circuitries which at present realise and comply with such functions.

In order to solve such problems, various interconnection systems are in use. For instance, interconnection with bus is the system that allows to exploit storages present in single processors, semaphorizing them by means of software or firmware in such a way as to make each processor to work singularly by stopping in stand-by the other and vice versa.

When processors are then coupled via serial lines it is possible to use DMAs (direct memory accesses) or interrupts systems which in the same way allow to individuate, in suitable times, signals from both processor sending them over the connection bus, i.e. over the serial line, without creating collision between transmitted signal packets.

However such type of solutions give rise to onerous circuit difficulties as hardware structures or software or firmware solutions are necessary which make the whole system heavy and therefore slow down data transmission between processors which have to be interfaced each other, thus subtracting process capacity to the interested processors.

Moreover, the circuitry to be assembled is very broad against the necessity of having a unique assembled and as compact as possible system, thus reducing the complexities and likewise the possibilities of errors during operation too, which are characteristic of the more complex systems.

It is object of the present invention to overcome the above mentioned limitations of the known art by realising and providing an integrated circuit device for interfacing between several processing units provided with microprocessors which allows to interconnect processors with different architectures and/or different modes of operation (synchronous and asynchronuos) and/or different operating frequencies, or different architectures of processors in a manner that is simple and operatively linear without increasing the circuitry and without the need of allocating firmware or software which slow down the handling of the whole system.

Advantageously such a device should be integrable, to solve the problems connected with space reduction and power dissipation of the interfaced processing systems.

Obviously such realisation, being more compact, optmizes also the reliability of the interfacing system itself.

This object is reached as set forth in claim 1, while further features and improvements are set forth in the subclaims.

The device will now be described in detail hereinafter by way of two embodiments thereof with reference to the accompanying drawings attached merely by way of indicative and not limitative example, in which:

Fig. 1    is a schematic block diagram of a first device according to the present invention, connected to an external memory, and

Fig. 2    is a schematic block diagram of a second device according to the present invention.

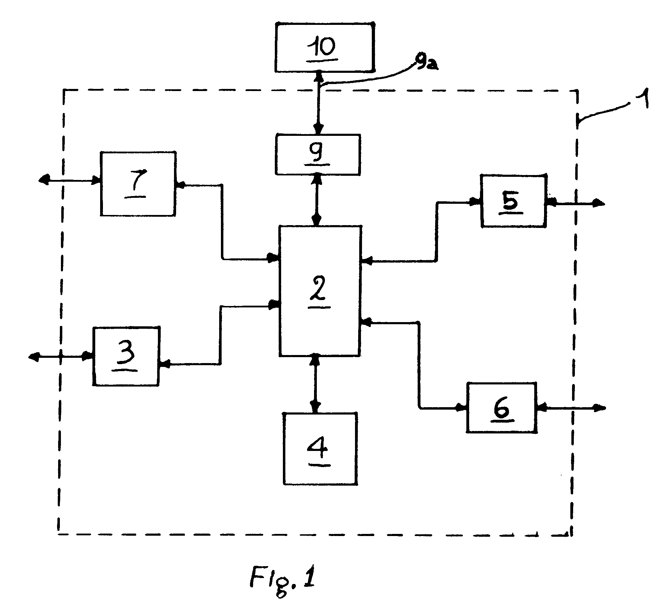

In Fig.1 the whole device according to the present invention has been indicated by reference numeral 1 and bordered by a broken line.

The reference numeral 2 stands for an internal control unit provided with its own memory 4 of the type RAM.

Block 3 represents an interfacing parallel port called OBCI (On Board Controller Interface).

Blocks 5 and 6 represent connection serial ports for connection to external processors.

Block 7 represents a parallel port for connection to local DSPs (digital signal processors).

Block 9 represents the interface to external memory 10 linkable through a but 9a.

All ports, interfaces and circuits present in the device 1 are realized by logic circuitries.

Having mainly described the structure of the whole device, which is, moreover, integrated on a single chip with VLSI technique, its operation according to the present invention follows.

In the device 1 according to the present invention it has been tried to optimize in an integrated fashion all the functions that normally are realised through distributed circuitry to permit connection between different processors or different structures provided with processors.

Moreover,it has been mainly tried to concentrate in the device a series of functions otherwise to be implemented by firmware or software in order to handle interfacing. This allows to lighten the load of processors relieving them from all activities required for the scanning of various data transmitted by each processor.

By means of serial ports 5 and 6, as well as parallel ports 3 and 7, it is possible to link, via serial or via parallel, boards containing different processors in order to be able to transmit data without creating collisions between the latters and with the same overhead.

Moreover, with such a device it is possible to physically and logically connect processors located either on the same structure or even on structures physically spaced from each other.

Through serial ports 6 and 5 it is possible to connect each other in a synchronous fashion different types of processors so that data are transmitted in cascade and autonomously handled by controller 2, which configures the external memory 10 according to the configuration suitable for the types of processors and processes being connected. The need for RAM memory 4 arises only in case a variable configuration of the eternal memory 10 is required, otherwise controller 2 may be designed in such a way as to satisfy the fixed requirements: for example if a fixed connection between two processors has to be provided in which one of them produces data and the other reads the same, the two actions being not synchronous, a simple queue has to be provided and no need exists for RAM memory 4.

Thus it is possible to exploit device 1 like an interfacing system and utilize external memory 10 as an exchange memory relative to processors which have been interconnected and to processes being executed on them.

More precisely, thanks to the internal control circutry, external memory 10 is configured according to a LIFO (last-in-first-out) structure i.e. the last data is outputted first, in such a way as to be able to exploit such type of memory structure for interfacing processors having different real time requirements and for making the operation asynchronous.

Similarly, when using eternal memory according to FIFO (first-in-first-out) structure it is possible to connect the processors by exploiting this eternal memory configured according to the criterion that the first data put into the memory is the first one which is then outputted making use of the same synchronization characteristics as mentioned above.

Further, the internal control unit 2 allows also the execute reading and writing operations of such memory 10 irrespective of the two processors being interfaced (multiport common memory modality).

More precisely, the parallel port 7 allows interfacing between standard processors e.g. 80x86 family, while parallel port 3 allows interfacing to Digital Standard Processors (DSP).

Parallel interfacing modality allows the above-mentioned processors to see the new memory blocks, virtualized by control unit 2, as normal memory locations provided with an enable signal.

Moreover, parallel ports are provided with a double-buffering logic in order to reduce their unavailability because of multiple access to internal control resourees and eternal memory (10).

It is also possible to represent the external memory 10 according to a ring structure, i.e. circular queue, which is a type of structure that is of interest to determined processes.

Serial ports 6 and 5 allow to transmit 4,096 Kbit/s with a 32 channel frame in such a way as to realize the serial connection between different physical entities (PBAs).

In other words, the basic philosophy consists in that such device exploits its internal controller 2, equipped with its own RAM 4 for interfacing parallel (7,3) and serial (5 or 6) ports using as work memory a normal RAM memory instead of specialized memories like FIFO and so on. Moreover,it is possible, depending on to which processors are interfaced, to represent the memory as external memory of a set of n (e.g. 64) independent memory blocks type multiport RAM, FIFO, LIFO or circular queues. This allows to interface several processes in execution on two processors independently connected and without overhead software.

The device according to the present invention allows also to accede in random mode to the external memory blocks handled as FIFOs or LIFOs. In practice, it is possible to accede to the queues by specifying an address from the top, so as to implement a delay line. This facility is useful in several algorithms of digital signal processing.

In fact, each memory block appears like a sole entity (memory location) characterized by the function programmed each time.

The utilization of FIFO modality allows in particular to connect transparently asynchronous processes resident on different processors both on the same PBA (interface through parallel ports) and on different PBAs (interface through multi-channel serial ports).

The serial ports are handled by control units in such a way as to appear like 32+32 independent channels. Each channel can be transformed on a FIFO queue in such a way as to extend the FIFO interface modality to different, serially connected, physical entities.

For each serial port, it has been forseen the programability of:

- bit rate (up to 10Mbits per second) in relation to external colck rate,
- frame structure (from 1 up to 32 time slots),
- channel number (both in transmission and in reception) corresponding to the frame strobe,
- logic (positive or negative) of the input/output signals, and
- clock edge (falling or rising) finding valid signals.

Each time slot contains a word of 16 bits. These can be considered all as data bits or part as data bits and part as control bits. By exploiting this feature the device according to the present invention is able to handle automatically data packets issued through the serial links and to signal packet availability (the end of the packet) to the addressed processor.

In case of connection to a PCM link, the device is able to operate the conversion from A/u law and viceversa, alleviating the processors form this extra overhead.

During the device operation a number of special conditions can be envisaged requiring special attention from the user (processor) of the device. These situations can arise from wrong or unallowed operations or formspecial physiological conditions related to the logical structure of the data block. The device is provided with a complex mechanism able to detect and to signal, separately to each processor port, the occurence of these events (full queue, empty queue, invalid block access, write protection violation, data packet availability, etc.). On the basis of the exception type , that the device indicates via a suitable set of registers, the processors can undertake the proper actions. Moreover these features are extremely useful in the firmware developing phase.

It is clear that such a device can be advantageously integrated in a single chip. The choice of having an external memory is mainly due to permit a higher flexibility; besides if the external memory 10 need to have a high capacity it would not be possible to integrate it on the same chip. Nevertheless in particular application where the amount of external memory is fixed, predetermined and not too big, such external memory 10 is integrated inside the same chip and this permits higher temporal performance.

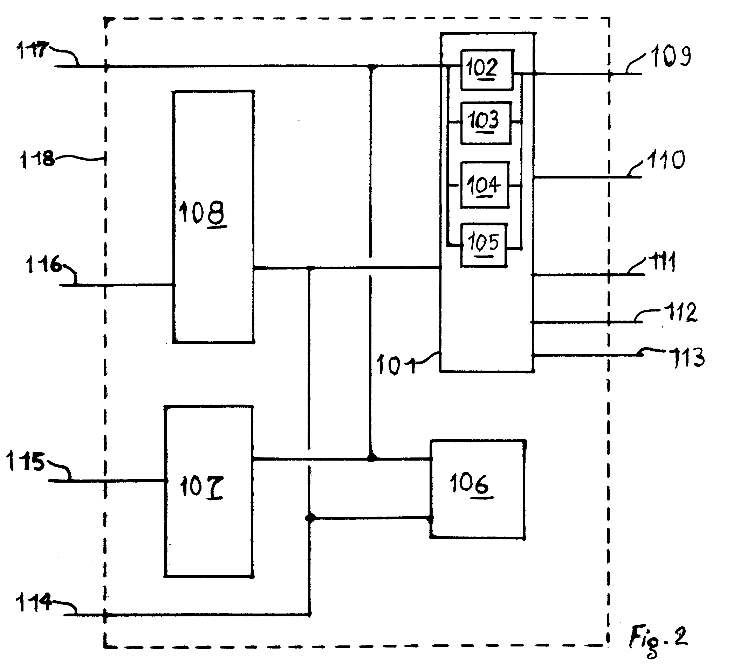

In Fig.2 it is shown a second device, according to the present invention, particularly designed to interface a host computer, provided with a microprocessor of the family iaPx80x86, and a speech processing module, provided with a microprocessor of the family 68000.

The device has been indicated as a whole by a block 118 and bordered by a broken line. Inside block 118, a first circuit block 101 represents the circuitry interfacing the host computer.

Such circuitry is structurally represented by and effectively embodied as a series of registers, used as memory devices, devoted to the exchange of data and controls between the host computer processor and the processor of the speech processing module not shown in Fig.2.

Inside circuit block 101 further circuits sections 102, 103, 104 and 105 are shown. In particular, circuits 102 and 103 are the memory devices used for asynchronous data exchange and circuits 104 and 105 are the memory devices used for DMA data exchange; they behave like single-element queues.

Block 106 represents a timer circuit of the whole device and in particular the circuit for the programmable timings of processor Motorola 68000 present in the speech processing module.

Block 107 represents a circuit for the handling of interrupts of processor 68000 present in the speech processing module.

Block 108 represents a decoding circuitry for decoding circulating signals towards and from the device 118.

Reference numeral 109 designates a connection line represented by a bus from and toward the host computer for the corresponding data transfer.

Reference numeral 110 indicates a connection line using a further bus to make circuit 101 receive addresses from host computer.

Reference numeral 111 represents only a connection, from and to the host computer, through a bus for receiving and transmitting control signals.

References numeral 112 and 113 represent connection lines for DMA mode. Line 112 is used for transmitting interrupt signals. Lines 112 and 113 are output connections from circuit 101.

Reference numeral 114 stands for an access line for the addresses, represented by a bus coming from the board of speech processing module.

Through a connection 115 all control data, to be sent then to the speech processing module, are sent to the interrupt control circuitry 107.

Reference numeral 116 represents addresses coming, through a bus, from the speech processing module for the decoding of circuitry 108.

Finally, 117 stands for I/O connections for input and output data of interfacing circuit 101.

The operation of the above mainly structural description of the invention with reference to Fig.2, follows.

Circuit block 101, which is specific for interfacing between, processor 68000 and host computer allows the control handling by using its own internal registers relative to the corresponding circuits 102 to 105 which, as said before, are specific for each determined operation mode.

In fact, circuit block 101, besides a series of registers used for the exchange of data and relative controls and addresses utilizing lines 109, 110 and 111, allows then the exchange of data and controls, both in asynchronous way and with DMA handling, through a further register, called status register, which can be accessed by both the processors.

More specifically, in the ambit of asynchronous mode, circuits 102 and 103 which are bidirectional asynchronous ports, are used, whilst in DMA mode circuits 104 and 105, which allow a fast exchange of large amounts of data and are still bidirectional ports, are used.

Obviously in both these circumstances the decoding at the input and at the output of the device 118 must occur.

Communication and handling of information exchange between respective processors may occur either by using the register, called status register, present in circuit 101 through a polling, i.e. a scanning control of states (which is performed merely by reading the status of the status register) or, in alternative, the dialogue can be handled through interrupts coming from both the host computer and the speech processing module and which are in practice handled through a register called mask register present in the interrupts circuit 107.

In such a circuit is also an encoder (not shown) which encodes all incoming interrupts.

Such interrupts block 107 handles also all resets of incoming/ outgoing lines to/from the device itself in order to semaphorize all signals which go into and come out of the device itself.

Timing occurs under specific control of block 106 which clocks all these functions through its own registers which allow its programming both in terms of counting and start and stop as well as reading of the status of the counting itself.

Normally, timing occurs in two successive writing steps and then finally the sixteen stage counter, present in the block, is started when it receives a determined start signal from circuit block 101 and begins to count starting from the value stored in the status register.

At the end of counting, a low value, active interrupt signal is generated, which will remain in this logic status till a signal coming from external processor will stop the counting.

In other words, by using circuits 102 and 103 for asynchronous modes and 104 and 105 for DMA modes, under specific control of circuit block 101 and by decoding all signals through decoder 108 and by timing the whole input signals through block 106, it is possible to handle the interfacing between two different processors by using interrupt control block 107 as a handling control device (in this instance the interrupts mode is used, whilst if a polling is used,such mode is not utilized).

Obviously the whole circuitry can be realised by using VLSI technique in order to optmize integration.

All circuit blocks can be realised using the GATE ARRAY techology with a number of 84 pins in this particular embodiment.

## Claims

1. Circuit device for interfacing between several processing units equipped with microprocessors, comprising:
   - at least two serial and/or parallel connection ports (3,5,6,7); 101,108), connecting said circuit device to said processing units, and managing connection peculiarities thanks to local intelligence,
   - an interface (9;101), suitable for interfacing to a memory (10;102,103,104,105),
   - a control unit (2;101,106,107), controlling said circuit device, connected to said connection ports (3,5,6,7,101,108) and to said interface (9;101), and handling the reading/writing of data from/to said connection ports (3,5,6,7;101,108) to/from said interface (9;101):

2. Circuit device according to claim 1 characterized in that it further comprises a memory (10;102,103,104,105) for loading data to be exchanged between said processing unit, and connected to said interface (9;101).

3. Circuit device according to claim 1 characterized in that said control unit (2) is provided with an own memory (4) for containing status information.

4. Circuit device according to claim 1 characterized in that said control unit (2;101,106,107) is designed to configure said memory (10;102,103,104,105) as one or more memory blocks, each memory block being of type selected from the group consisting of: multiport RAM, FIFO, LIFO, circular queue.

5. Circuit device according to claim 4 characterized in that said memory blocks are logically indipendent and connected to said microprocessors as single entities having all handling operation activities autonomously governed by said device.

6. Circuit device according to claim 1 characterized in that said control unit (2) allows to perform writing/reading operations to/from said memory (10) as if it were a memory at disposal of said microprocessors.

7. Circuit device according to claim 4 characterized in that said own memory (4) contains such configuration of said memory (10).

8. Circuit device according to claim 4 characterized in that said control unit (2) configures said memory (10) according to data received from at least one of said connection ports (3,5,6,7).

9. Circuit device according to claim 3, characterized in that said status information is readable by said processing units.

10. Circuit device according to claim 3 characterized in that in relation to said status information, messages are automatically sent to at least one of said processing units to signal particular conditions.

Fig. 1

Fig. 2

European Patent Office

# EUROPEAN SEARCH REPORT

Application Number

EP    91 12 0547

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 164 972 (A. T. & T.)<br>* abstract; figures 1-3 *<br>* page 2, line 13 - page 3, line 35 *<br>* page 5, line 13 - line 19 *<br>* page 13, line 27 - line 29 *<br>* page 14, line 26 - page 16, line 17 *<br>* claims 1,2,11 * | 1,2 | G06F15/16 |
| Y | | 3-10 | |
| | --- | | |
| Y | EP-A-0 026 649 (SPERRY)<br>* abstract; figures 1,3,4 *<br>* page 1, line 1 - page 3, line 6 *<br>* page 7, line 21 - line 26 *<br>* page 10, line 4 - page 11, line 20 *<br>* page 13, line 20 - page 14, line 8 *<br>* claims 1,2,6 * | 3-10 | |
| | --- | | |
| Y | EP-A-0 393 319 (IBM)<br>* abstract; figures 1,2,6,11 *<br>* column 1, line 37 - line 52 *<br>* column 4, line 1 - line 18 *<br>* column 5, line 4 - line 34 *<br>* column 8, line 32 - column 9, line 28 *<br>* claims 1,4 * | 4-8 | TECHNICAL FIELDS SEARCHED (Int. Cl.5)<br><br>G06F |
| A | | 3 | |
| | --- | | |
| A | US-A-3 483 520 (BRODERICK ET AL)<br>* abstract; figure 1 *<br>* column 1, line 64 - column 2, line 48 *<br>* column 4, line 52 - column 5, line 17 *<br>* claim 1 * | 1,2,5,10 | |
| | ----- | | |

The present search report has been drawn up for all claims

| Place of search | Date of completion of the search | Examiner |
|---|---|---|
| THE HAGUE | 11 MARCH 1992 | POWELL D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)